# EUROPEAN PATENT APPLICATION

(11) **EP 1 603 000 A2**
(43) Date of publication of application: **07.12.2005**
(21) Application number: 04256661.2
(22) Date of filing: 28.10.2004
(51) Int. Cl.: G06F 1/00

(54) **Information processor, method, and program for preventing tampering**

(30) Priority: 31.05.2004 JP 2004162050
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Ito, Yoshinori, c/o Fujitsu Frontech Limited, Tokyo 206-8555 (JP)
(74) Representative: Stebbing, Timothy Charles

(57) **Abstract**

An information processor includes a security module 2 that stores security data, decrypts a signature on an application, the application comprising the signature and an application main body, using a common key to obtain a first hash, and outputs the obtained first hash; and a main unit 1 that calculates a second hash, which is a hash of the application main body, and outputs a signal to the security module 2 when the first and second hashes differ from each other. The security module 2 deletes the security data in response to the signal received from the main unit 1. Thus, an anti-tampering function is provided.

## Description

The present invention relates to an information processor, a method, and a program for preventing tampering by detecting modification of software and performing deletion of security data or the like.

A conventional information processor (terminal) having a security function implements a tamper-proof function for preventing customers from changing settings of the terminal and using the modified terminal for wrong (unintended) purposes. The tamper-proof function is a mechanism that deletes security data within a security module in the information processor when tampering (opening/malicious modification) is detected. The security data mentioned here includes a key, data, logic, and the like for security. In a conventional tamper-proof function, a tamper switch for detecting opening of hardware is used. By means of the tamper switch, the tamper function detects tampering when hardware is opened and then deletes security data to prevent improper use of the terminal. This is because conventional information processors having a security function are system-integrated as a dedicated terminal in which software is not disclosed to ensure high security, and therefore the likelihood of hardware modification being attempted is higher than that of software modification being attempted.

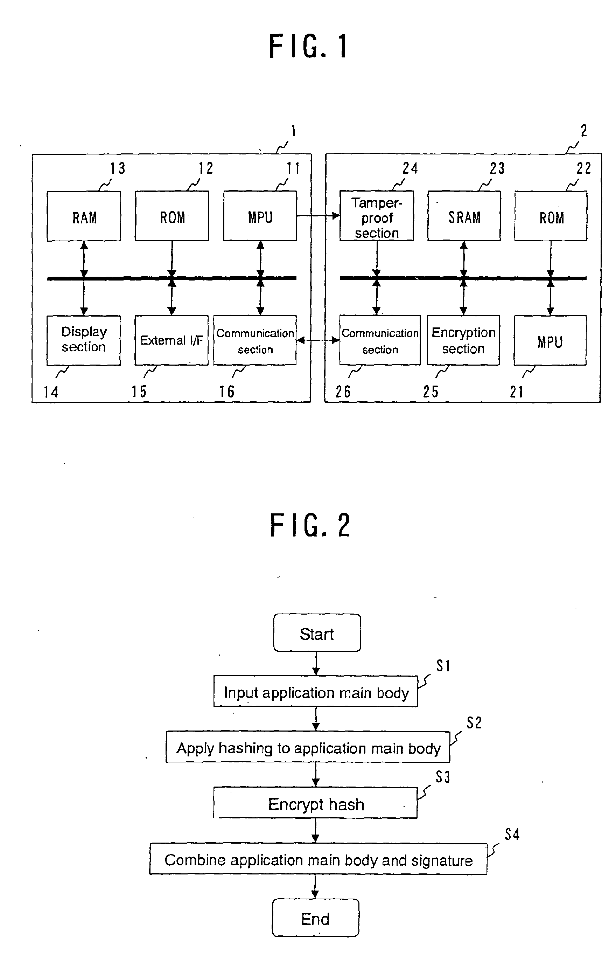

Also, Japanese Patent Laid-Open No. 2000-322253 (pages 4 to 7, FIG. 1) is known as a conventional technique for preventing tampering. The technique disclosed in the publication relates to a security system that authenticates a program that has been encrypted using a public key, in which when a malicious program has been detected, its operation is cancelled.

The aforementioned conventional tamper-proof function can counter hardware modification that involves physical opening. However, it is impossible for the conventional tamper-proof function to detect a software attack carried out through rewriting of a Flash ROM (Read Only Memory) or the like. In particular, in the case where a versatile operating system whose specification is published openly is employed, it becomes more likely that the information processor is exposed to a software attack. Thus, the conventional tamper-proof function is ineffective against such a software attack.

A method of prohibiting execution of an unauthorized application has been widely used as a mechanism for preventing a software attack. With this method, however, vulnerability of an authorized application may be used to perform an improper operation by an authority corresponding to the vulnerability level. Further, in the case where a kernel or driver is rewritten, there is the possibility that a more serious improper operation, such as one resulting in information leaks, is performed.

It is therefore desirable to solve the above problems and to provide an information processor, a method and a program that can perform a detection process to detect an improper operation and an authentication process to recognize the improper operation as tampering (a tamper) and can delete security data within a security module.

According to a first aspect of the present invention, there is provided an information processor for executing an application that can access security data, the application being constituted by combining an application main body and a signature which is obtained by encrypting a hash of the application main body using a common key, the processor comprising: a main unit; and a security module that stores the security data, decrypts the signature using the common key, and outputs an obtained first hash to the main unit; wherein the main unit calculates a second hash, which is a hash of the application main body, outputs a signal to the security module when the first and second hashes differ from each other, and executes the application when the first and second hashes coincide with each other, and wherein the security module deletes the security data in response to the signal received from the main unit.

According to a second aspect of the present invention, there is provided an information processor for executing an application that can access security data, the application being constituted by adding a signature obtained by using a common key to an application main body according to an access authorization level of the application, the processor comprising: a security module that stores the security data, and decrypts the signature using the common key; and a main unit that executes the application and outputs a signal to the security module when an access that is not authorized by (according to) the access authorization level corresponding to the signature has occurred, wherein the security module deletes the security data in response to the signal received from the main unit.

According to a third aspect of the present invention, there is provided an information processor in which security data can be accessed using a program stored in a Flash ROM, the processor comprising: a security module that stores the security data; and a main unit that executes the program and outputs a (delete) signal to the security module when a signal indicating that the Flash ROM has been improperly rewritten is generated, wherein the security module deletes the security data in response to the (delete) signal received from the main unit.

In the information processor according to the third aspect, the signal indicating the rewriting of the Flash ROM may include a Write Enable signal and a Chip Select signal.

Alternatively, in the information processor according to the third aspect, the signal indicating the rewriting of the Flash ROM may be an Erase signal or Write protect cancellation signal.

According to a fourth aspect of the present invention, there is provided a tamper-proof (anti-tamper) method for executing an application that can access security data, the application being constituted by combining an application main body and a signature which is obtained by encrypting a hash of the application main body using a common key, the method comprising the steps of: storing the security data; outputting a first hash obtained by decrypting the signature using the common key; calculating a second hash, which is a hash of the application main body, and comparing the first and second hashes; and executing the application when the first and second hashes coincide with each other and deleting the security data when the first and second hashes differ from each other.

According to a fifth aspect of the present invention, there is provided a tamper-proof method for executing an application that can access security data, the application being constituted by adding a signature obtained by using a common key to an application main body according to an access authorization level of the application, the method comprising the steps of: storing the security data; decrypting the signature using the common key; and executing the application, and deleting the security data when an access that is not authorized by the access authorization level corresponding to the signature has occurred.

According to a sixth aspect of the present invention, there is provided a tamper-proof method in which security data can be accessed using a program stored in a Flash ROM, the method comprising the steps of: storing the security data; executing the program and monitoring whether a signal indicating that the Flash ROM has been improperly rewritten is generated; and deleting the security data when the signal is generated.

According to a seventh aspect of the present invention, there is provided a tamper-proof (anti-tampering) program causing a computer to execute a tamper-proof method that executes an application that can access security data, the application being constituted by combining an application main body and a signature which is obtained by encrypting a hash of the application main body using a common key, the method comprising the steps of: storing the security data; outputting a first hash obtained by decrypting the signature using the common key; and calculating a second hash, which is a hash of the application main body, and comparing the first and second hashes; and executing the application when the first and second hashes coincide with each other and deleting the security data when the first and second hashes differ from each other.

According to an eighth aspect of the present invention, there is provided a tamper-proof program causing a computer to execute a tamper-proof method that executes an application that can access security data, the application being constituted by adding a signature obtained by using a common key to an application main body according to an access authorization level of the application, the method comprising the steps of: storing the security data; decrypting the signature using the common key; and executing the application, and deleting the security data when an access that is not authorized by the access authorization level corresponding to the signature has occurred.

According to a ninth aspect of the present invention, there is provided a tamper-proof program causing a computer to execute a tamper-proof method in which security data can be accessed by a program stored in a Flash ROM, the method comprising the steps of: storing the security data; executing the program and monitoring whether a signal indicating that the Flash ROM has been improperly rewritten is generated; and deleting the security data when the signal is generated.

The aforementioned tamper-proof program can be recorded onto a computer-readable medium. The computer-readable medium mentioned here includes: a portable recording medium such as a CD-ROM, a flexible disk, a DVD disk, a magnetooptical disk, an IC card; a database that holds a computer program; other computers and their databases; and a transmission medium on a communication line. The information processor mentioned here includes, as equipment having a CPU, a computer and personal computer, as well as a mobile phone, a note-type personal computer, a PDA (Personal Digital Assistant), a digital camera, a digital video camera, and the like.

According to aspects of the present invention, a tamper-proofing function to counter attacks using vulnerability of software can be provided. The use of a common key in generating an application signature increases computation speed in the encryption and decryption processing, and saves device cost. The common key, which cannot be used further if it has been leaked, is configured to be used within the security module, which prevents the leakage of the common key.

Further, according to aspects of the present invention, it is possible to eliminate a process of giving a signature in the security room (secure area) with respect to an application that accesses only to data or I/O that is not associated with security. As a result, it is possible to significantly reduce product cost as compared to the method in which the signature must be given to every application. Further, it is possible to give an appropriate access authorization level in advance for each application.

Further, according to aspects of the present invention, it is possible to prevent improper rewriting of a Flash ROM. Further, the increased security of the Flash ROM allows basic software such as kernels or drivers to be stored in the Flash ROM, which significantly reduces update cost or the like as compared to the case where the basic software is stored in a Mask ROM.

Reference will now be made, by way of example only, to the accompanying drawings, in which:
FIG. 1 is a block diagram showing an example of a configuration of an information processor according to a first embodiment of the present invention;
FIG. 2 is a flowchart showing an application creating process in the information processor according to the first embodiment;
FIG. 3 is a flowchart showing an application authentication process in the information processor according to the first embodiment;
FIG. 4 is a flowchart showing an application creating process in the information processor according to a second embodiment;
FIG. 5 is a flowchart showing an application execution process in the information processor according to the second embodiment;
FIG. 6 is a block diagram showing an example of a configuration of an information processor of a third embodiment; and
FIG. 7 is a flowchart showing a process of detecting improper rewriting of the Flash ROM in the information processor according to the third embodiment.

Embodiments of the present invention will be described below with reference to the accompanying drawings.

### [First Embodiment]

As a first embodiment, an information processor that allows a main unit thereof to check a signature on an application and to send a tamper signal (which corresponds to the "signal" according to the present invention) to a security module when the application is an improper one, to allow the security module to delete security data, will be described.

Firstly, a configuration of the information processor according to the first embodiment of the present invention will be described. FIG. 1 is a block diagram showing an example of a configuration of the information processor (tamper-proof information processor or tamper-proof information terminal) according to the first embodiment of the present invention. The information processor of the first embodiment includes a main unit 1 and a security module 2. The main unit 1 includes an MPU (Microprocessing Unit) 11, a ROM 12, a RAM (Random Access Memory) 13, a display section 14, an external I/F (interface) 15, and a communication section 16. The ROM 12 is a Mask ROM or Flash ROM. The security module 2 includes an MPU 21, a ROM 22, an SRAM (Static Random Access Memory) 23, a tamper-proof section 24, an encryption section 25, and a communication section 26. The security module 2 operates at all times on a different power source from the one for the main unit 1.

Each component constituting the main unit 1 is configured to function as follows: the MPU 11 controls the main unit 1; the ROM 12 stores programs such as kernels, drivers, or the like that are needed for operation of the main unit 1; the RAM 13 stores installed applications; the display section 14 displays an execution result of application or the like; and the external I/F 15 is connected to an external device and performs data input/output operations.

Each component of the security module 2 is configured to function as follows: the MPU 21 controls the security module 2; the ROM 22 stores programs that are needed for operation of the security module 2; the SRAM 23 stores security data including a common key, data, and logic (the security data can be written onto the SRAM 23 only at a security room); the encryption section 25 encrypts or decrypts the information from the main unit 1 and returns its result to the main unit 1; and the tamper-proof section 24 deletes the security data in the SRAM 23 in response to a received tamper signal, thereby disabling operation of the security module 2 and main unit 1.

The communication section 16 of the main unit 1 and the communication section 26 of the security module 2 exchange hashes, signatures or the like between them.

Next, an application creation process in the information processor according to the first embodiment will be described. FIG. 2 is a flowchart showing the application creation process in the information processor according to the first embodiment. Firstly, the MPU 11 stores an application received from the external I/F 15 into the RAM 13 (S1). The MPU 11 then applies hashing to an application main body, and sends the obtained hash to the security module 2 (S2).

The MPU 21 then allows the encryption section 25 to encrypt the hash using the common key stored in the SRAM 23, and sends the encrypted hash as a signature to the main unit 1 (S3). The MPU 11 then newly stores an application obtained by combining the application main body and the signature into the RAM 13 (S4) and ends this process.

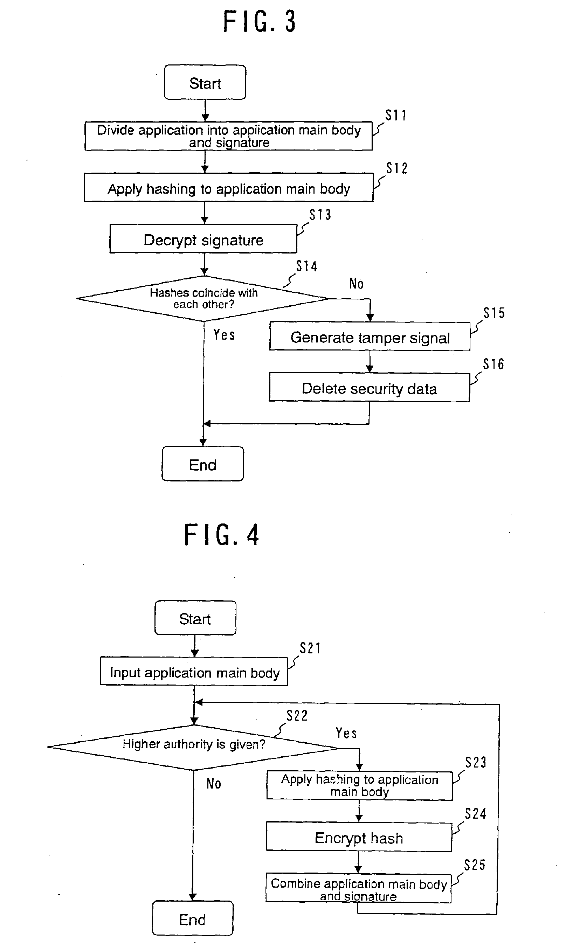

Next, an application authentication process in the information processor according to the first embodiment will be described. FIG. 3 is a flowchart showing the application authentication process in the information processor according to the first embodiment. When the application is started, the MPU 11 firstly divides the application into the application main body and signature, and sends the signature to the security module 2 (S11). The MPU 11 then applies hashing to the application main body (S12). The MPU 21 allows the encryption section 25 to decrypt the signature using the common key stored in the SRAM 23, and sends the obtained hash to the main unit 1 (S13). Then the MPU 11 compares the hash obtained from the application main body and that obtained from the signature and determines whether the two hashes coincide with each other (S14).

When the hashes coincide with each other (Yes in S14), the MPU 11 ends this process. When the hashes differ from each other (No in S14), the MPU 11 generates a tamper signal and sends it to the security module 2 (S15). Upon receiving the tamper signal, the tamper-proof section 24 deletes security data within the SRAM 23 (S16), and this process ends.

A tamper-proofing function to counter attacks using the vulnerability of software can thus be realized in the aforementioned information processor. The use of a common key in generating an application signature increases computation speed in the encryption and decryption processing, and saves device cost. The common key, which can no longer be used if it has been leaked, is configured to be used within the security module, which prevents the leakage of the common key.

### [Second Embodiment]

As a second embodiment, an information processor that enables the main unit to provide access authorization corresponding to (depending on) a signature on the application, and to send a tamper signal to the security module when the application has gained unauthorized access and to allow the security module to delete the security data, will be described.

Firstly, a configuration of the information processor according to the second embodiment will be described. The information processor of the second embodiment has the same configuration as that of the information processor as shown in FIG. 1.

Next, an application creation process in the information processor according to the second embodiment will be described. FIG. 4 is a flowchart showing the application creation process in the information processor according to the second embodiment. Firstly, the MPU 11 stores an application received from the external I/F 15 into the RAM 13 (S21). The MPU 11 then determines whether to give a basic or higher level of authority to the application (S22). A higher level of authority enables the application to access more data.

When determining that higher authority is to be given to the application (Yes in S22), the MPU 11 applies hashing to an application main body, and sends the obtained hash to the security module 2 (S23). Then the MPU 21 allows the encryption section 25 to encrypt the hash using the common key stored in the SRAM 23 and sends the encrypted hash as a signature to the main unit 1 (S24). Subsequently, the MPU 11 newly stores an application obtained by combining the application main body and the signature into the RAM 13 (S25) and returns to the process S22. When determining that higher authority is not given to the application (No in S22), the MPU 11 ends this process.

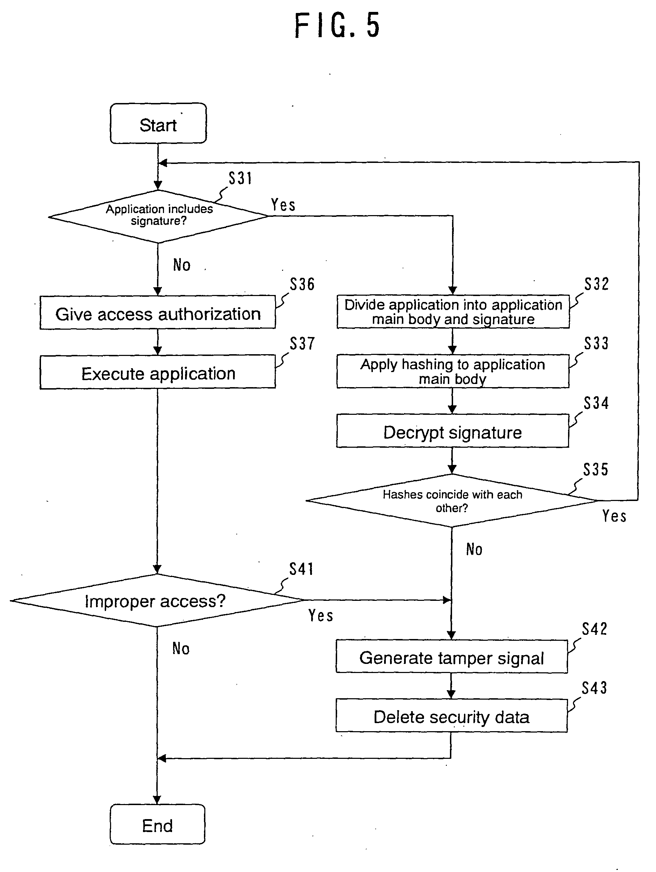

Next, an application execution process in the information processor according to the second embodiment will be described. FIG. 5 is a flowchart showing the application execution process in the information processor according to the second embodiment. When the application is started, firstly the MPU 11 determines as to whether the application stored in the RAM 13 includes signatures that have not been decrypted (S31).

When determining that there exist signatures that have not been decrypted (Yes in S31), the MPU 11 divides the application into the application main body and a signature, and sends the signature to the security module 2 (S32). Then the MPU 11 applies hashing to the application main body (S33). The MPU 21 allows the encryption section 25 to decrypt the signature using the common key stored in the SRAM 23, and sends a result of the decryption to the main unit 1 (S34). The MPU 11 compares the hash obtained from the application main body and that obtained from the signature and determines whether the two hashes coincide with each other (S35).

When the two hashes coincide with each other (Yes in S35), the MPU 11 executes the process S31 with respect to other signatures. On the other hand, when the two hashes differ from each other (No in S35), the MPU 11 generates a tamper signal and sends it to the security module 2 (S42). On receiving the tamper signal, the tamper-proof circuit 24 deletes the security data in the SRAM 23 (S43) and ends this process.

When determining, in the process S31, that the application includes no encrypted signatures to be decrypted (No in S31), the MPU 11 gives access authorization corresponding to contents of the decrypted signatures to the application (S36). For example, in the case where the application includes no signature, the MPU 11 gives, to the application, access authentication to data or I/O that is not associated with security; in the case where the application includes "signature 1", the MPU 11 gives, to the application, additional access authentication to data or I/O that has been set to security level 1; and in the case where the application includes "signature 2", the MPU 11 gives, to the application, additional access authentication to data or I/O that has been set to security level 2. As many security levels can be set as are required.

Then the MPU 11 executes the application (S37), and determines whether an unauthorized access occurs by monitoring the application (S41).

When determining that no unauthorized access has occurred, the MPU 11 ends this process (No in S41). On the other hand, when determining that an unauthorized access has occurred, the MPU 11 shifts to the process S42.

As described above, the configuration of the aforementioned information processor can eliminate the process of giving a signature in the security room with respect to the application that accesses only to data or I/O that is not associated with security. As a result, it is possible to significantly reduce product cost as compared to the method in which a signature must be given to every application. Further, it is possible to give an appropriate access authorization in advance for each application.

### [Third Embodiment]

As a third embodiment, an information processor that allows the main unit to send a tamper signal when a Flash ROM holding kernels or drivers is improperly rewritten, and allows the security module to delete the security data will be described.

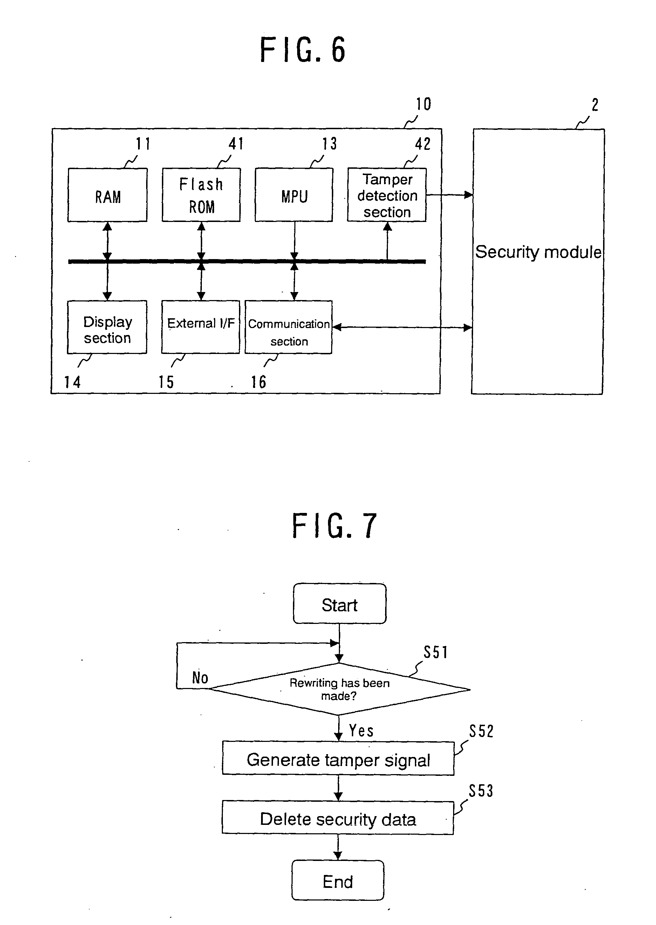

Firstly, a configuration of the information processor according to the third embodiment will be described. FIG. 6 is a block diagram showing an example of a configuration of the information processor of the third embodiment. In FIG. 6, the same reference numerals denote the same or corresponding parts as in FIG. 1, and the descriptions thereof will be omitted. As shown in FIG. 6, the information processor of the third embodiment includes a main unit 10 in place of the main unit 1. The main unit 10 has a Flash ROM 41 in place of the ROM 12, and newly has a tamper detection section 42. The tamper detection section 42 monitors the Flash ROM 41 to determine whether the Flash ROM is improperly rewritten. When determining that the Flash ROM has been (improperly) rewritten, the tamper detection section 42 outputs a tamper detection signal to the tamper-proof section 24.

Next, a process of detecting improper rewriting of the Flash ROM in the information processor according to the third embodiment will be explained. FIG. 7 is a flowchart showing a process of detecting improper rewriting of the Flash ROM in the information processor according to the third embodiment. The tamper detection section 42 monitors Write Enable signal and Chip Select signal of the Flash ROM 41 to determine whether rewriting has been done to the Flash ROM 41 (S51). In this case, the tamper detection section 42 determines that the Flash ROM 41 has been rewritten when both Write Enable signal and Chip Select signal of the Flash ROM 41 become active. When determining that the Flash ROM 41 has not been rewritten (No in S51), the tamper detection section 42 returns to the process S51, where it continues to monitor the Flash ROM 41. On the other hand, when determining that rewriting has been done to the Flash ROM 41 (Yes in S51), the tamper detection section 42 generates a tamper signal and sends it to the security module 2 (S52). On receiving the tamper signal, the tamper-proof section 24 in the security module 2 deletes the security data stored in the SRAM 23 (S53), and the tamper detection section 42 ends this process.

In the third embodiment, as described above, the tamper detection section 42 monitors Write Enable signal and Chip Select signal. Alternatively, however, the tamper detection section 42 may monitor Erase signal or Write Protect cancellation signal with respect to the Flash ROM 41. In this case, when detecting Erase signal or Write Protect cancellation signal, the tamper detection section 42 determines that the Flash ROM 41 has been written and generates a tamper signal.

As described above, the information processor can prevent improper rewriting of the Flash ROM. Further, the increased security of the Flash ROM allows basic software such as kernels or drivers to be stored in the Flash ROM, which significantly reduces update cost or the like as compared to the case where the basic software is stored in a Mask ROM.

## Claims

1. An information processor for executing an application that can access security data, the application being constituted by combining an application main body and a signature which is obtained by encrypting a hash of the application main body using a common key, the information processor comprising:
a main unit; and
a security module that stores the data, decrypts the signature using the common key, and outputs an obtained first hash to the main unit; wherein
the main unit calculates a second hash, which is a hash of the application main body, outputs a signal to the security module when the first and second hashes differ from each other, and executes the application when the first and second hashes coincide with each other, and
wherein
the security module deletes the security data in response to the signal received from the main unit.

2. An information processor for executing an application that can access security data, the application being constituted by adding a signature obtained by using a common key to an application main body according to an access authorization level of the application, the information processor comprising:
a security module that stores the security data, and decrypts the signature using the common key; and
a main unit that executes the application and outputs a signal to the security module when an access that is not authorized by the access authorization level corresponding to the signature has occurred, wherein
the security module deletes the security data in response to the signal received from the main unit.

3. An information processor in which security data can be accessed using a program stored in a Flash ROM, comprising:
a security module that stores the security data; and
a main unit that executes the program and outputs a delete signal to the security module when a signal indicating that the Flash ROM has been improperly rewritten is generated, wherein
the security module deletes the security data in response to the delete signal received from the main unit.

4. The information processor according to claim 3, wherein
the signal indicating the rewriting of the Flash ROM includes Write Enable signal and Chip Select signal.

5. The information processor according to claim 3, wherein
the signal indicating the rewriting of the Flash ROM is Erase signal or Write protect cancellation signal.

6. An anti-tamper method for executing an application that can access security data, the application being constituted by combining an application main body and a signature which is obtained by encrypting a hash of the application main body using a common key, the method comprising the steps of:
storing the security data;
outputting a first hash obtained by decrypting the signature using the common key;
calculating a second hash, which is a hash of the application main body, and comparing the first and second hashes; and
executing the application when the first and second hashes coincide with each other and deleting the security data when the first and second hashes differ from each other.

7. An anti-tamper method for executing an application that can access security data, the application being constituted by adding a signature obtained by using a common key to an application main body according to an access authorization level of the application, the method comprising the steps of:
storing the security data;
decrypting the signature using the common key; and
executing the application, and deleting the security data when an access that is not authorized by the access authorization level corresponding to the signature has occurred.

8. An anti-tamper method in which security data can be accessed using a program stored in a Flash ROM, comprising the steps of:
storing the security data;
executing the program and monitoring whether a signal indicating that the Flash ROM has been improperly rewritten is generated; and
deleting the security data when the signal is generated.

9. An anti-tamper program containing program code which, when executed by a computer, causes the computer to execute an anti-tamper method for executing an application that can access security data, the application being constituted by combining an application main body and a signature which is obtained by encrypting a hash of the application main body using a common key, the method comprising the steps of:
storing the security data;
outputting a first hash obtained by decrypting the signature using the common key;
calculating a second hash, which is a hash of the application main body, and comparing the first and second hashes; and
executing the application when the first and second hashes coincide with each other and deleting the security data when the first and second hashes differ from each other.

10. An anti-tamper program containing program code which, when executed by a computer, causes the computer to execute an anti-tamper method for executing an application that can access security data, the application being constituted by adding a signature obtained by using a common key to an application main body according to an access authorization level of the application, the method comprising the steps of:
storing the security data;
decrypting the signature using the common key; and
executing the application, and deleting the security data when an access that is not authorized by the access authorization level corresponding to the signature has occurred.

11. An anti-temper program containing program code which, when executed by a computer, causes the computer to execute an anti-temper method in which security data can be accessed by a program stored in a Flash ROM, the method comprising the steps of:
storing the security data;
executing the program and monitoring whether a signal indicating that the Flash ROM has been improperly rewritten is generated; and
deleting the security data when the signal is generated.
